# EUROPEAN PATENT APPLICATION

(11) **EP 3 168 466 A1**
(43) Date of publication of application: **17.05.2017**
(21) Application number: 16002374.3
(22) Date of filing: 09.11.2016
(51) Int. Cl.: F03G 6/06, F24J 2/06, F24J 3/08, F24J 2/07, F24J 2/14, F24J 2/54

(54) **SOLAR RAY CONCENTRATION SYSTEM**

(30) Priority: 11.11.2015 GB 201519936
(71) Applicant: Van Leeuw, Jon Otegui, 81737 Munich (DE)
(72) Inventor: Van Leeuw, Jon Otegui, 81737 Munich (DE)

(57) **Abstract**

The present invention comprises a solar thermal power generation system which comprises the use of Plano concave mirrors (1.2, 2.2, 3.1, 3.4) which are positioned one over the other (1.2, 2.2, 3.1, 3.4) on a tower-like structure (1.6, 3.2) ,which all (1.2, 2.2, 3.1, 3.4) deflect the solar rays to a focal point at the mid-point of said Plano concave mirrors (1.2, 2.2, 3.1, 3.4), hence heating said point's area (1.1, 2.1, 2.6), in which a pump driven flowing fluid collects said heat and is driven through a primary fluid circuit (2.1, 2.3, 2.4, 2.5, 2.6, 2.7, 2.8, 2.9, 2.10) along all of said Plano concave mirrors (1.2, 2.2, 3.1, 3.4), such that the same pipe (2.13, 2.14) then drives said fully heated fluid down said tower mast structure (1.6) to a steam generator (3.14). A pipe (3.130 of secondary circuit drives liquid water into the steam generator (3.14), where said pipe (3.15) collects the heat from the primary circuit, and is driven through said pipe (3.16) as stem to a steam turbine(s) (3.17) by said secondary circuit's pipe (3.16), therefore bringing the solar ray concentration system's surface area to a minimum. Said steam turbine (3.17) in turn drives generators to generate electricity. The exhaust steam is driven through a steam exhaust pipe (3.12) out of the system.

So, the present invention comprises a solar ray concentration system which comprises a set of various Plano concave shaped mirrors (1.2, 2.2, 3.1, 3.4) which are positioned one on top of each other (1.2, 2.2, 3.1, 3.4) and are each attached to a tower structure (1.6, 3.2) by the means of a rigid structure (2.1, 2.6, 2.5, 2.8) which comprises a pipe inside it (2.1, 2.6, 2.5, 2.8), such that the rotation towards the sun of said Plano concave mirrors (1.2, 2.2, 3.1, 3.4) is actuated by an actuator positioned at the focal point area (1.1, 2.1, 2.6), where a pipe projects in parallel to said Plano concave mirrors (1.2, 2.2, 3.1, 3.4) in the case of each mirror (1.2, 2.2, 3.1, 3.4), hence rotating said mirrors about said focal pipe (1.1, 2.1, 2.6), while all of said pipes (2.1, 2.3, 2.4, 2.5, 2.6, 2.7, 2.8, 2.9, 2.10) make up a single main pipe (2.1, 2.3, 2.4, 2.5, 2.6, 2.7, 2.8, 2.9, 2.10) which flows into the tower structure, therefore driving a liquid or gas up or down through the focal points (1.1, 2.1, 2.6) of said mirrors, through said pipe (2.1, 2.3, 2.4, 2.5, 2.6, 2.7, 2.8, 2.9, 2.10) which drives said fluid or gas through said focal pipes (1.1, 2.1, 2.6).

## Description

### Technical field:

### Solar power plant engineering

### Description of the invention:

The present invention comprises a solar thermal power generation system which comprises the use of mirrors which are positioned one over the other in a tower-like structure which all deflect the solar rays to a concentrated point down a channel which projects down towards the ground, hence bringing the solar ray concentration system's surface area to a minimum.

The present invention comprises a solar ray concentration system which comprises a set of various Plano concave shaped mirrors which are positioned one on top of each other and are each attached to a tower structure by the means of a rigid structure which comprises a pipe inside it, such that the rotation towards the sun of said Plano concave mirrors is actuated by an actuator positioned at the focal point area, where a pipe projects parallel to said Plano concave mirrors in the case of each mirror, hence rotating said mirrors about said focal pipe, while all of said pipes are connected to a main pipe which flows into the tower structure, therefore driving a liquid or gas up or down through the focal points of said mirrors, through said access pipes which connect to said focal pipes.

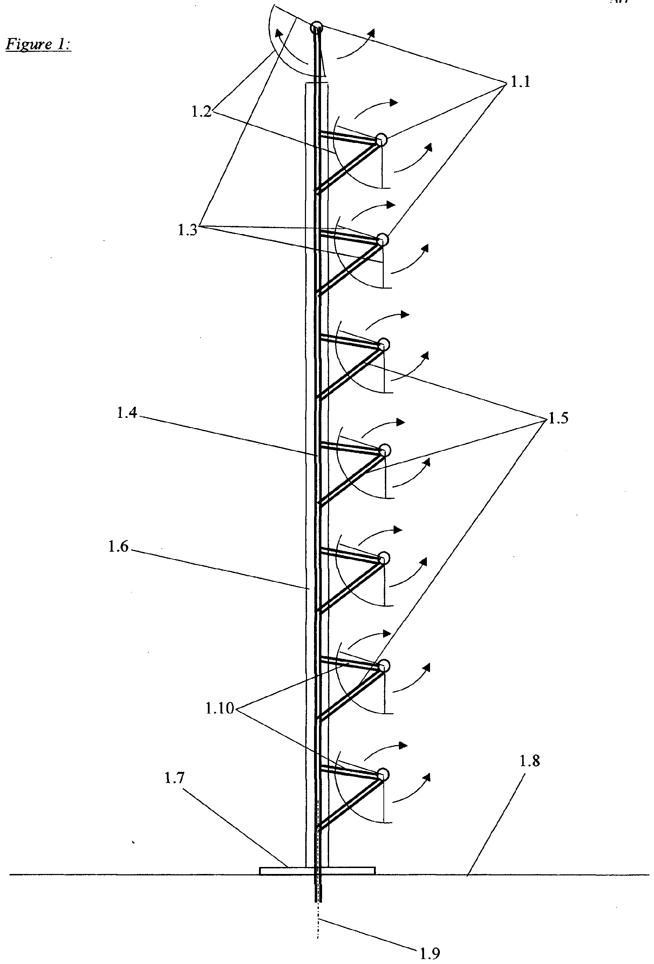

Figure 1 shows a side view of the solar ray concentration system, comprising the tower structure (1.6), as well as the pipes (1.4, 1.5) and a side view of the Plano-concave shaped collection mirrors (1.2).

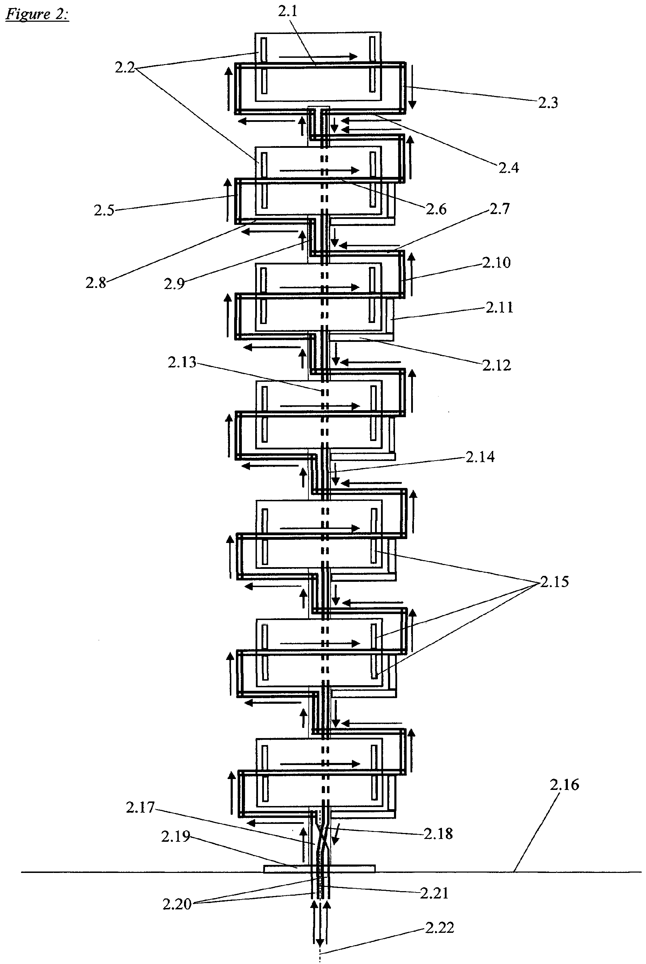

Figure 2 comprises a front view of the solar ray concentration system.

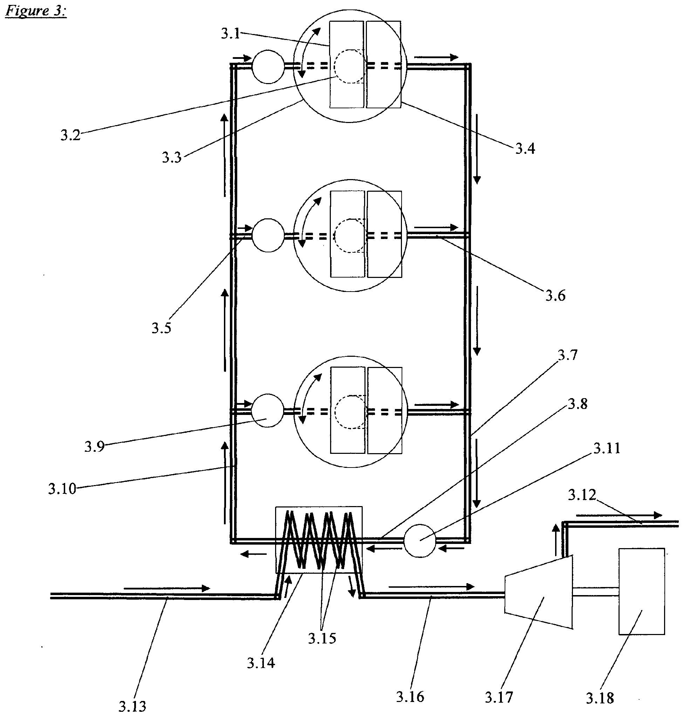

Figure 3 comprises a top view of the fluid circuits involved on said power generation system, as well as its relating equipment for heat transfer to water and electricity generation.

This invention concerns a solar ray concentration system which comprises a set of various Plano concave shaped mirrors (1.2) which are positioned one on top of each other and are each attached to a tower structure (1.6) by the means of a rigid structure (1.5) which comprises a pipe inside it (1.5), such that the rotation towards the sun of said Plano concave mirrors (1.2) is actuated by an actuator positioned at the focal point area (1.1), where a pipe (1.1) projects parallel to said Plano concave mirrors (1.2) in the case of each mirror (1.2), hence rotating said mirrors (1.2) about said focal pipe (1.1), while all of said pipes (1.1) are connected to a main pipe (1.4) which flows into the tower structure (1.6), therefore driving a liquid or gas up or down through the focal points (1.1) of said mirrors (1.2), through said access pipes (1.5) which connect to said focal pipes (1.1), such that said fluid is then driven up or down the tower structure (1.6) via a second main pipe (1.4) which drives said fluid onto the ground (1.8) and to a heat exchanger, which transfers the heat from said liquid to flowing water in a separate pipe system, which converts said flowing water into steam to drive turbines, which in turn drive generators and produce electricity.

On said solar ray concentration system, the upper Plano concave mirror (1.2) which is positioned at the very top of said tower mast (1.6), is positioned on top of said tower structure (1.6) such that the focal point (1.1) and the focal pipe (1.1) are positioned just over the tow driving pipes (1.4), which are those which sustain said top Plano concave mirror (1.2) via the rigid structures of these (1.4).

Said pipes (1.4) which drive the fluid along the tower mast (1.6) comprise a pipe (1.4) which drives the fluid up said mast (1.6), and a second pipe (1.4) which drives the fluid down said mast (1.6).

The fluid which is driven through the main pipes (1.4) and access pipes (1.5), preferably a noble gas, and most preferably water, is being driven by a pump or compressor up and then down into the main pipes (1.4) inside said tower mast (1.6). The fluid can be compressed such that the system heats water of a separate flowing circuit by acting as a heat pump, which does so by concentrating the solar rays in order to heat the water. On the other hand, pressurised water could easily transport the heat concentrated on the mirrors (1.2) without converting to steam due to its high pressures.

The heat transferred to the previously mentioned fluid by said mirrors (1.2) converts the flowing water of a separate water flowing circuit into steam inside a steam generator, or inside a heat exchanger.

Said upward driving main pipe (1.4) drives water in front of said concave mirrors of claim 1 (1.2) prior of driving it down said mast structure (1.6) through another main pipe (1.4).

Said upward driving main pipe (1.4) can also drive water down through the mast structure (1.6) in front of said concave mirrors of claim 1 (1.2) after driving it up into said mast structure (1.6) through another main pipe (1.4).

The Plano-concave mirrors (1.2) comprise each two access pipes (1.5), one which drives the fluid to the focal area (1.1) of the mirrors (1.1), and another one (1.5) which drives the water away from said focal area (1.1) after passing inside a pipe (1.1) through the focal point (1.1) of said mirrors (1.2) and hence collecting the heat from the solar rays. The same fluid is driven through the focal points (1.1) of all the mirrors in a concentrated single pipe system. The het collection process from the mirrors (1.2) can be completed before the fluid flows up said tower mast (1.6) and then be driven down said mast (1.6) to the heat exchanger or steam generator. Alternatively, the heat collection process from the mirrors (1.2) can be completed after said fluid is driven to the top of said toward mast (1.6) and start collecting heat from the solar rays from the top positioned upper mirror (1.2) down to the last lowest positioned mirror (1.2) before being driven to the heat exchanger or steam generator.

The top upper positioned mirror (1.2) is positioned on the top of the mast structure (1.6), and the access pipes (1.5) of said top mirror (1.2) make part of the two main pipes (1.4), which hence are connected together by this mirror (1.2). The position at the top of said mast (1.6) maximises the light rays that can be received by the top mirror (1.2), and hence maximises its efficiency. The main pipes (1.4) are comprised by two separate pipes (1.4) which are connected together at the top pf said mast (1.6), hence forming one single pipe (1.4). One pipe (1.4) drives the fluid up, and the other pipe (1.4) drives the fluid down said mast (1.6).

The access pipes (1.5), driving water in front of the mirrors (1.2), thus make part of the two main pipes (1.4), which in turn form one single main pipe (1.4).

Both pipes (1.4) project parallel to the other and mostly vertically when being comprised inside the structure of the vertical mast (1.6).

After passing through the heat exchanger or steam generator, said fluid is driven around the circuit loop again by the means of a pump or a compressor.

The fluid should be either a refrigerant, preferably a noble gas, or water, which is a fluid which can be easily compressed to high pressures.

Said tower mast (1.6) is rotated by an electric motor and/or actuator, such that said system rotates a basement (1.7) which attaches to aid tower mast (1.6), hence rotating it (1.6, 1.7) about the mast's centre line (1.9) in order to orientate said Plano concave mirrors (1.2) towards the sun.

The design of the tower mast structure (1.6) comprises two pipes (1.5, 1.10), one (1.5, 1.10) to drive the fluid up, and another one (1.5, 1.10) to drive said fluid downwards after having collected the heat form said Plano-concave mirrors (1.2).

The tower masts structure (1.6) comprises a basement circular plate (2.19) which offers stability to the structure (1.6). The rotational motion of said tower mast structure (1.6) is actuated by an electric motor, which is positioned under said basement plate (2.19). Said rotational motion is present to position said Plano-concave mirrors (2.2) constantly in front of the incoming solar rays. Said rotational motion is performed about an axis (2.22) which is positioned through the centre point of said mast structure's (1.6) cross-sectional area.

The intake pipe (2.17) drives fluid in front of said Plano-concave mirrors (2.22), and should preferably be positioned such that the outward pipe (2.21) is positioned in the middle of said intake pipe (2.17). This design is to avoid any leaks form the heated high pressure fluid which comes down through said outward pipe (2.21), as the high temperatures will have heated the fluid to high pressures.

The working fluid which is driven along said tower mast structure (1.6) is driven by an electric pump, and should be pressurised steam, synthetic oil or molten salt. However, synthetic oil should preferably be used for this system, as it will not turn into steam after collecting the heat energy.

The tower masts structure (1.6) always projects perpendicularly to the ground level's plane (2.16). The outward guiding pipe (2.13, 2.14, 2.18) flows along the centre of said tower mast structure (1.6) after collecting the heat energy. This design offers physical protection to the highly pressurised fluid pipe (2.13, 2.14, 2.18).

The supports (2.15) connect the Plano-concave mirrors' (2.2) surfaces to that of the centre beam (1.1) from which said mirrors (2.2) are being rotated or oriented. This support (2.15) design should be made of a rigid metallic material, preferably steel, titanium or aluminium, and hence sustain said Plano-concave mirrors (2.2) in place.

A rigid support which comprises a horizontal member (2.12) projecting sideways and attached to said mast structure (1.6), as well as an upward vertically projecting member (2.11) connected to the end of said horizontally projecting member (2.12), is comprised in the system's design. Said design is comprised to support the unsupported side of said horizontally projecting members (2.6), which are positioned in front of said Plano-concave mirrors (2.2), and house the passing intake pipe (2.17, 2.6) in order to collect heat energy form said Plano-concave mirrors (2.2).

At each Plano-concave mirror (2.2), the intake pipe (2.17) comprises a vertically projecting part (2.10) which connects to the lateral side of said pipe (2.6) after heat collection. Said pipe connects to a horizontally projecting part (2.7) which drives said pipe back to the mast structure (1.6). Said pipe then follows through a vertically projecting part (2.9) along the tower mast structure (1.6) until arriving under the next Plano-concave mirror (2.2). At that point, said pipe follows to another horizontally projecting part (2.8) which drives the fluid to the edge of the next upper Plano-concave mirror (2.2). This is followed aby a vertically projecting part (2.5) to drive the fluid to the level of said next upper Plano-concave mirror, followed by a horizontally projecting pipe (2.6) which finally drives said fluid in front of said next upper Plano-concave mirror (2.2). Said pipe drives the fluid in front of said mirror (2.2) in order for said fluid to collect the heat form said pipe. This process is repeated over and over again while said fluid is driven along all Plano-concave mirrors (2.2) of the tower mast structure (1.6). The upper Plano-concave mirror (2.2) comprises a horizontally projecting part (2.1) of said intake pipe, which projects in front of it (2.2), in order for the fluid to collect the concentrated heat energy before being driven through a downwards vertically projecting pipe (2.3) which project until reaching a level under said mirror. The pipe then finally projects horizontally in a horizontally projecting part (2.4), and connects to the outward pipe (2.13, 2.14, 2.18), which then drives said fluid vertically down the entire tower mast structure (1.6). Said outward pipe (2.13, 2.14, 2.18) then drives said fluid vertically into the basement and under said mast structure (1.6).

Saud design can also comprise said intake pipe (2.13, 2.14, 2.18) driving said fluid up said tower mast structure (1.6), and then driving said fluid back in along each Plano-concave mirror (2.2), and hence driving said fluid back down through the other second pipe (2.5, 2.6, 2.7, 2.8, 2.9, 2.10, 2.17). This design would offer its own advantages.

Said fluid is pressurised steam, molten salt or synthetic oil. Said fluid is, after leaving said outward pipe (2.13, 2.14, 2.18), driven along an evacuation pipe (3.6). Said design can comprise a set of tower mast structures (3.2) being positioned one beside each other in a linear-like pattern. The advantage of this design is that said fluid can be distributed into said various tower mast structures (3.2) in order for the heat transfer efficiency to be as high as possible.

Said power generation system's designs therefore comprises a fluid distribution pipe (3.10) which drives said fluid towards each tower mast structure (3.2). At each mast structure (3.2), a fluid driving pipe (3.5) drives the fluid to a pump (3.9), which is electrically powered, and applies enough pressure for the fluid to be driven until the top surfaces of said toward mast structure (1.6, 3.2). After said fluid leaves the tower mast structure's (1.6, 3.2) system after thermal energy collection, said fluid is driven through a fluid evaporation pipe (3.6) which connects with the outward pipe (2.13, 2.14, 2.18) of each tower mast structure (1.6, 3.2). Each tower mast structure would comprise a fluid evacuation pipe (3.6). A fluid collection pipe (3.7) collects the fluid from all fluid evacuation pipes (3.6), and guides said fluid to a heat exchanger (3.14) or steam generator (3.14). A pump (3.11) can be present along said pipe (3.7) if the fluid needs a higher pressure prior of being driven through said heat exchanger or steam generator (3.14). Then, the whole process is repeated again and again. The fluid is then driven from said pump (3.11) to said heat exchanger or steam generator (3.14) by a fluid driving pipe (3.8).

The tower mast structures (1.6, 3.2) are rotated about the centre point axis (2.22) of the tower mast structures' (1.6, 3.2) cross-sectional areas. The basement plates (2.19, 3.3) offer stability to the tower mast structures (1.6, 3.2), and can be rotated with these (1.6, 3.2). The rotational motion is electrically actuated, and is controlled by a computerised controller. Said computerised controller is controlled by a solar clock which supplies data to the computerised controller, or by a programmed solar position on the horizon concerned where said system is situated, for at least one entire year. The mirrors (3.1, 3.4) are constantly attached to said tower mast structure (1.6, 3.2), which means that said mirrors (3.1, 3.4), which means that these (3.1, 3.4) will be rotated together with the entire tower mast structure (1.6, 3.2) if this (1.6, 3.2) is rotated.

A driving pipe (3.13) guides a flow of water through the heat transfer pipes (3.15) of said heat exchanger or steam generator (3.14), such that said water is then driven in the form of steam through a steam driving pipe (3.16) to at least one steam turbine (3.17), which is mechanically driven by said steam, and hence drives a generator (3.18) or alternator (3.18) in order to produce electricity. Said electricity is then used for industry, or to power anything appropriate, and can be delivered to the electrical gird immediately for appropriate use. The remaining steam is then driven from said steam turbine (3.17) to a heat exchanger or a condenser through a steam evacuation pipe (3.12), prior of being condensed into water and being driven back to said steam generator or heat exchanger (3.14) by said water driving pipe (3.13), hence starting the process over and over again while said system is in operation.

The fluid which is driven through the fluid pipes along the mirrors (1.2, 2.2) and along the tower mast structure (1.6) should be water, molten salt, pressurised steam, or an oil, preferably synthetic oil. Said fluids are the most suitable fluids to be driven along the primary circuit (2.13, 2.14, 2.17, 2.18) of the power generation system.

The Plano-concave mirrors (1.2, 2.2) of the tower mast structure are mounted one on top of each other (1.2, 2.2) in an orderly manner, and the pipes (2.13, 2.14, 2.17, 2.18) of the primary circuit (2.13, 2.14, 2.17, 2.18) guide said fluid along each of said mirrors (1.2, 2.2), before delivering said heated fluid to a steam generator, or to a storage container, in which said molten salt or synthetic oil can be stored, hence storing the heat energy.

Said mirrors (1.2, 2.2) can also comprise a concave shape, such that the light rays will be concentrated entirely towards a focal point in front of the central area of said concave mirrors (1.2, 2.2). The light rays would therefore transfer the heat energy to a pipe (1.4, 2.13, 2.14, 2.18) which would project vertically and in parallel to the centre of the tower mast structure (1.6). This system would reduce the number of pipes required, and also reduce the piping distance travelled by the fluid, hence reducing heat losses, and increasing the power generation system's efficiency. The concave mirrors (1.2, 2.2) concentrate the light rays towards a focal point. Said fluid driving pipe (2.13, 2.14, 2.17, 2.18) projects along and through the focal point areas of said concave mirrors (1.2, 2.2), such that the heat collection pipe (2.13, 2.14, 2.17, 2.18) transfers all the required heat energy supplied by the concave mirrors (1.2, 2.2) to said fluid. Said fluid should be water, pressurised steam, molten salt or synthetic oil, but most preferably synthetic oil. Said concave mirrors are fully orientable according to the sun's position on the horizon at any given time during the day, either by the rotational actuators (1.1) or by the rotational motion (3.3) of the tower structure's mast (1.6, 3.2).

Said elements of the solar ray concentration system concerned, are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a combination of at least two of said materials.

Said solar ray concentration system can be used to supply power and/or supply heat and/or supply water and/or comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, dockyards.

The present invention therefore comprises a solar ray concentration system which comprises a set of various Plano concave shaped mirrors (1.2) which are positioned one on top of each other and are each attached to a tower structure (1.6) by the means of a rigid structure (1.5) which comprises a pipe inside it (1.5), such that the rotation towards the sun of said Plano concave mirrors (1.2) is actuated by an actuator positioned at the focal point area (1.1), where a pipe (1.1) projects parallel to said Plano concave mirrors (1.2) in the case of each mirror (1.2), hence rotating said mirrors (1.2) about said focal pipe (1.1), while all of said pipes (1.1) are connected to a main pipe (1.4) which flows into the tower structure (1.6), therefore driving a liquid or gas up or down through the focal points (1.1) of said mirrors (1.2), through said access pipes (1.5) which connect to said focal pipes (1.1), such that said fluid is then driven up or down the tower structure (1.6) via a second main pipe (1.4) which drives said fluid onto the ground (1.8) and to a heat exchanger, which transfers the heat from said liquid to flowing water in a separate pipe system, which converts said flowing water into steam to drive turbines, which in turn drive generators and produce electricity.

The preferred embodiments are hence the following.

A solar ray concentration system according to the above in which the upper Plano concave mirror (1.2) positioned at the very top of said tower mast (1.6), is positioned on top of said tower structure (1.6) such that the focal point (1.1) and the focal pipe (1.1) are positioned just over the two driving pipes (1.4), which are those which sustain said top Plano concave mirror (1.2) via the rigid structures of these (1.4).

A solar ray concentration system according to the above in which said pipes (1.4) which drive the fluid along the tower mast (1.6) comprise a pipe (1.4) which drives the fluid up said mast (1.6), and a second pipe (1.4) which drives the fluid down said mast (1.6).

A solar ray concentration system according to the above in which said fluid, preferably a noble gas, water, synthetic oil, molten salt or pressurised steam, and most preferably synthetic oil, is being driven by a pump or compressor up and then down into the main pipes (1.4) inside said tower mast (1.6).

A solar ray concentration system according to the above in which the heat transferred to said fluid by said mirrors (1.2) converts the flowing water of a separate water flowing circuit into steam inside a steam generator.

A solar concentration system according to the above in which said upward driving main pipe (1.4) drives water in front of said concave mirrors (1.2) prior of driving it down said mast structure (1.6) through another main pipe (1.4).

A solar concentration system according to the above in which said upward driving main pipe (1.4) drives water in front of said concave mirrors (1.2) after driving it up into said mast structure (1.6) through another main pipe (1.4).

A solar ray concentration system according to the above in which said tower mast (1.6) is rotated by an electric motor and/or actuator, such that said system rotates a basement (1.7) which attaches to aid tower mast (1.6), hence rotating it (1.6, 1.7) about the mast's centre line (1.9) in order to orientate said Plano concave mirrors (1.2) towards the sun, such that the tower masts structure (1.6) comprises a basement circular plate (2.19) which offers stability to the structure (1.6), such that the rotational motion of said tower mast structure (1.6) is actuated by an electric motor, which is positioned under said basement plate (2.19). Said rotational motion is present to position said Plano-concave mirrors (2.2) constantly in front of the incoming solar rays, such that said rotational motion is performed about an axis (2.22) which is positioned through the centre point of said mast structure's (1.6) cross-sectional area.

A solar ray concertation system according to the above in which said mirrors (1.2, 2.2) can also comprise a concave shape, such that the light rays will be concentrated entirely towards a focal point in front of the central area of said concave mirrors (1.2, 2.2), such that the light rays would therefore transfer the heat energy to a pipe (1.4, 2.13, 2.14, 2.18) which would project vertically and in parallel to the centre of the tower mast structure (1.6), such that this system would reduce the number of pipes required, and also reduce the piping distance travelled by the fluid, hence reducing heat losses, and increasing the power generation system's efficiency, hence meaning that the concave mirrors (1.2, 2.2) concentrate the light rays towards a focal point, such that said fluid driving pipe (2.13, 2.14, 2.17, 2.18) projects along and through the focal point areas of said concave mirrors (1.2, 2.2), such that the heat collection pipe (2.13, 2.14, 2.17, 2.18) transfers all the required heat energy supplied by the concave mirrors (1.2, 2.2) to said fluid.

A solar ray concertation system according to the above in which said design can comprise a set of tower mast structures (3.2) being positioned one beside each other in a linear-like pattern, such that the advantage of this design is that said fluid can be distributed into said various tower mast structures (3.2) in order for the heat transfer efficiency to be as high as possible.

A solar ray concertation system according to the above in which said power generation system's designs therefore comprises a fluid distribution pipe (3.10) which drives said fluid towards each tower mast structure (3.2), such that at each mast structure (3.2), a fluid driving pipe (3.5) drives the fluid to a pump (3.9), which is electrically powered, and applies enough pressure for the fluid to be driven until the top surfaces of said toward mast structure (1.6, 3.2), such that after said fluid leaves the tower mast structure's (1.6, 3.2) system after thermal energy collection, said fluid is driven through a fluid evaporation pipe (3.6) which connects with the outward pipe (2.13, 2.14, 2.18) of each tower mast structure (1.6, 3.2), such that each tower mast structure would comprise a fluid evacuation pipe (3.6), hence meaning that a fluid collection pipe (3.7) collects the fluid from all fluid evacuation pipes (3.6), and guides said fluid to a heat exchanger (3.14) or steam generator (3.14).

A solar ray concertation system according to the above in which a water driving pipe (3.13) guides a flow of water through the heat transfer pipes (3.15) of said heat exchanger or steam generator (3.14), such that said water is then driven in the form of steam through a steam driving pipe (3.16) to at least one steam turbine (3.17), which is mechanically driven by said steam, and hence drives a generator (3.18) or alternator (3.18) in order to produce electricity.

A solar ray concertation system according to the above in which said intake pipe (2.17) drives fluid in front of said Plano-concave mirrors (2.22), and should preferably be positioned such that the outward pipe (2.21) is positioned in the middle of said intake pipe (2.17).

A solar ray concentration system according to the above in which said elements are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a combination of at least two of said materials.

A solar ray concentration system according to the above which is used to supply power and/or supply heat and/or supply water and/or comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, satellites, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports, and dockyards.

## Claims

1. A solar ray concentration system which comprises a set of various Plano concave shaped mirrors (1.2) which are positioned one on top of each other and are each attached to a tower structure (1.6) by the means of a rigid structure (1.5) which comprises a pipe inside it (1.5), such that the rotation towards the sun of said Plano concave mirrors (1.2) is actuated by an actuator positioned at the focal point area (1.1), where a pipe (1.1) projects parallel to said Plano concave mirrors (1.2) in the case of each mirror (1.2), hence rotating said mirrors (1.2) about said focal pipe (1.1), while all of said pipes (1.1) are connected to a main pipe (1.4) which flows into the tower structure (1.6), therefore driving a liquid or gas up or down through the focal points (1.1) of said mirrors (1.2), through said access pipes (1.5) which connect to said focal pipes (1.1), such that said fluid is then driven up or down the tower structure (1.6) via a second main pipe (1.4) which drives said fluid onto the ground (1.8) and to a heat exchanger, which transfers the heat from said liquid to flowing water in a separate pipe system, which converts said flowing water into steam to drive turbines, which in turn drive generators and produce electricity.

2. A solar ray concentration system according to Claim 1 in which the upper Plano concave mirror (1.2) positioned at the very top of said tower mast (1.6), is positioned on top of said tower structure (1.6) such that the focal point (1.1) and the focal pipe (1.1) are positioned just over the two driving pipes (1.4), which are those which sustain said top Plano concave mirror (1.2) via the rigid structures of these (1.4).

3. A solar ray concentration system according to Claims 1 to 2 in which said pipes (1.4) which drive the fluid along the tower mast (1.6) comprise a pipe (1.4) which drives the fluid up said mast (1.6), and a second pipe (1.4) which drives the fluid down said mast (1.6).

4. A solar ray concentration system according to Claims 1 to 3 in which said fluid, preferably a noble gas, water, synthetic oil, molten salt or pressurised steam, and most preferably synthetic oil, is being driven by a pump or compressor up and then down into the main pipes (1.4) inside said tower mast (1.6).

5. A solar ray concentration system according to Claims 1 to 4 in which the heat transferred to said fluid by said mirrors (1.2) converts the flowing water of a separate water flowing circuit into steam inside a steam generator.

6. A solar concentration system according to Claims 1 to 5 in which said upward driving main pipe (1.4) drives water in front of said concave mirrors (1.2) prior of driving it down said mast structure (1.6) through another main pipe (1.4).

7. A solar concentration system according to Claims 1 to 6 in which said upward driving main pipe (1.4) drives water in front of said concave mirrors (1.2) after driving it up into said mast structure (1.6) through another main pipe (1.4).

8. A solar ray concentration system according to Claims 1 to 7 in which said tower mast (1.6) is rotated by an electric motor and/or actuator, such that said system rotates a basement (1.7) which attaches to aid tower mast (1.6), hence rotating it (1.6, 1.7) about the mast's centre line (1.9) in order to orientate said Plano concave mirrors (1.2) towards the sun, such that the tower masts structure (1.6) comprises a basement circular plate (2.19) which offers stability to the structure (1.6), such that the rotational motion of said tower mast structure (1.6) is actuated by an electric motor, which is positioned under said basement plate (2.19). Said rotational motion is present to position said Plano-concave mirrors (2.2) constantly in front of the incoming solar rays, such that said rotational motion is performed about an axis (2.22) which is positioned through the centre point of said mast structure's (1.6) cross-sectional area.

9. A solar ray concertation system according to Claims 1 to 8 in which said mirrors (1.2, 2.2) can also comprise a concave shape, such that the light rays will be concentrated entirely towards a focal point in front of the central area of said concave mirrors (1.2, 2.2), such that the light rays would therefore transfer the heat energy to a pipe (1.4, 2.13, 2.14,2.18) which would project vertically and in parallel to the centre of the tower mast structure (1.6), such that this system would reduce the number of pipes required, and also reduce the piping distance travelled by the fluid, hence reducing heat losses, and increasing the power generation system's efficiency, hence meaning that the concave mirrors (1.2, 2.2) concentrate the light rays towards a focal point, such that said fluid driving pipe (2.13, 2.14, 2.17, 2.18) projects along and through the focal point areas of said concave mirrors (1.2, 2.2), such that the heat collection pipe (2.13, 2.14, 2.17, 2.18) transfers all the required heat energy supplied by the concave mirrors (1.2, 2.2) to said fluid.

10. A solar ray concertation system according to Claims 1 to 9 in which said design can comprise a set of tower mast structures (3.2) being positioned one beside each other in a linear-like pattern, such that the advantage of this design is that said fluid can be distributed into said various tower mast structures (3.2) in order for the heat transfer efficiency to be as high as possible.

11. A solar ray concertation system according to Claims 1 to 10 in which said power generation system's designs therefore comprises a fluid distribution pipe (3.10) which drives said fluid towards each tower mast structure (3.2), such that at each mast structure (3.2), a fluid driving pipe (3.5) drives the fluid to a pump (3.9), which is electrically powered, and applies enough pressure for the fluid to be driven until the top surfaces of said toward mast structure (1.6, 3.2), such that after said fluid leaves the tower mast structure's (1.6, 3.2) system after thermal energy collection, said fluid is driven through a fluid evaporation pipe (3.6) which connects with the outward pipe (2.13, 2.14, 2.18) of each tower mast structure (1.6, 3.2), such that each tower mast structure would comprise a fluid evacuation pipe (3.6), hence meaning that a fluid collection pipe (3.7) collects the fluid from all fluid evacuation pipes (3.6), and guides said fluid to a heat exchanger (3.14) or steam generator (3.14).

12. A solar ray concertation system according to Claims 1 to 11 in which a water driving pipe (3.13) guides a flow of water through the heat transfer pipes (3.15) of said heat exchanger or steam generator (3.14), such that said water is then driven in the form of steam through a steam driving pipe (3.16) to at least one steam turbine (3.17), which is mechanically driven by said steam, and hence drives a generator (3.18) or alternator (3.18) in order to produce electricity.

13. A solar ray concertation system according to Claims 1 to 12 in which said intake pipe (2.17) drives fluid in front of said Plano-concave mirrors (2.22), and should preferably be positioned such that the outward pipe (2.21) is positioned in the middle of said intake pipe (2.17).

14. A solar ray concentration system according to Claims 1 to 13 in which said elements are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a combination of at least two of said materials.

15. A solar ray concentration system according to Claims 1 to 14 which is used to supply power and/or supply heat and/or supply water and/or comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, satellites, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports, and dockyards.
